(19)

Europäisches
Patentamt

European
Patent Office

Office européen
des brevets

(11) **EP 4 711 403 A1**

(12) **EUROPEAN PATENT APPLICATION**

(43) Date of publication:
**18.03.2026  Bulletin 2026/12**

(51) International Patent Classification (IPC):
**C08J 5/18** (2006.01)

(21) Application number: **24306497.9**

(52) Cooperative Patent Classification (CPC):
**C08J 5/18;** C08J 2367/00; C08J 2461/28

(22) Date of filing: **12.09.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nexdot**
**93230 Romainville (FR)**

(72) Inventors:
- **D'AMICO, Michele**
 **93230 Romainville (FR)**
- **DUBERTRET, Benoit**
 **93230 Romainville (FR)**

(74) Representative: **Icosa**
 **83 avenue Denfert-Rochereau**
 **75014 Paris (FR)**

(54) **ANTI-UV COATING**

(57) The present invention relates to a filtering film comprising compounds absorbing UV-light in a range from 300 nm to 380 nm and a binder, wherein the weighted mean absorbance $A_{380}$ is greater than 2.

**FIG. 2**

EP 4 711 403 A1

**Description**

**FIELD OF DISCLOSURE**

The present disclosure relates to the field of UV protection, in particular for food products, cosmetic formulations and fragrances.

**BACKGROUND OF DISCLOSURE**

It is common knowledge that UV light can have deleterious effects on various commercial products, such as food products, cosmetic formulations and fragrances.

For instance, UV light can affect the flavour of food products. In the brewing and wine industry it has been known for centuries that light, and in particular sunlight, may negatively affect the flavour of many types of beers or wines. The flavour resulting from the light exposure is therefore commonly referred to as "lightstruck" flavour and considered by most consumers to be highly repulsive.

Besides, in cosmetic products and fragrances, many different odorous compounds are used. Among these, aldehydes represent a huge family of compounds, such as vanillin, phenylacetaldehyde, heliotropine, ionone, citronellal, or methylnonylacetaldehyde; and their derivatives to name but a few.

Currently, UV stabilizers are added to the cosmetic products and fragrances - for instance the widely used azobenzone, despite the alleged harmful effects of its degradation products on human health, sea life and environment.

It has also to be noted that main UV stabilizers have been developed for the plastic industry, in which degradation mechanisms are merely associated to free radical formation. This mechanism is however less relevant for protection of aldehydes derivatives.

Acetaldehyde shear a common feature in terms of UV light interaction: they can absorb a UV photon to promote an electron from n state of the oxygen of carbonyl bound into a non-bounding $\pi^*$ state of the carbonyl bound, thus lowering carbonyl bound energy and allowing reaction of the aldehyde function - for instance oxidation, or formation of lactone or acetal. The typical energy involved in such electronic transition corresponds to the range from 280 nm to 290 nm UV-light. This range of UV light is not encountered naturally in sunlight - it is filtered out by atmosphere. However, aldehydes of interest often present a conjugate structure: insaturations - either ethylenic or aromatic - lead to a lowering of energy required for transition of electron from *n* state to $\pi^*$ state, in such a way that UV light in a range from 300 nm to 340 nm becomes source of degradation. This range of UV-light is present in natural sunlight, though in small quantities.

Glass is absorbing a part of UV light in a range from 300 nm to 340 nm. The efficiency of absorption is directly correlated with glass thickness. Though, a trend in industry is to limit the weight of packaging, leading to a decrease in glass thickness for glass containers. Therefore, the absorbing properties of glass need to be substituted by additional filtering means.

There is thus a need for a light filtering material, such as a filtering film suitable to be laid on glass containers, allowing for efficient filtration of UV-light in the range of wavelength around 300-340 nm while keeping a very low colour. Such an achromatic filter allows to use white glass containers without the risk of product degradation. White glass containers allow for a better presentation of the liquid contained therein and are more adapted to high end markets. Such filters enable also to reduce the thickness - and weight - of glass containers.

The Applicant has found that these needs could be met with filtering films having a specific weighted mean absorbance defined in relationship with the solar spectrum irradiance $E_S(\lambda)$ and a sensitivity function $S(\lambda)$ of aldehydes and other organic delicate molecules.

**SUMMARY**

This disclosure thus relates to a filtering film comprising compounds absorbing UV-light in a range from 300 nm to 380 nm and a binder, wherein the weighted mean absorbance $A_{380}$ of the filtering film is greater than 2, with $A_{380}$ defined by the following relation:

$$A_{380} = \frac{\int_{300}^{380} W(\lambda)A(\lambda)d\lambda}{\int_{300}^{380} W(\lambda)d\lambda}$$

where $A(\lambda)$ represents the absorbance of the filtering film at a given wavelength, and $W(\lambda)$ represents a weighting function equal to the product of the solar spectrum irradiance $E_S(\lambda)$ and a sensitivity function $S(\lambda)$ defined as a gaussian function with the peak centered at 300 nm and a standard deviation of 24 nm.

In an embodiment, the weighted mean absorbance $A_{380}$ is greater than 2.5, preferably greater than 3.

In an embodiment, the weighted mean absorbance $A_{340}$ of the filtering film is greater than 2, preferably greater than 2.5, with $A_{340}$ defined by the following relation:

$$A_{340} = \frac{\int_{300}^{340} W(\lambda)A(\lambda)d\lambda}{\int_{300}^{340} W(\lambda)d\lambda}$$

In an embodiment, the compounds absorbing UV-light comprise semi-conductive nanoparticles having a formula

$$M_xE_y \qquad (I),$$

wherein:

M is selected from the group consisting of Zn, Cd, Hg, Cu, Ag, Al, Ga, In, Si, Ge, Sn, Pb or a mixture thereof;
E is selected from the group consisting of O, S, Se, Te, N, P, As, Sb, or a mixture thereof;
x and y are independently a decimal number from 0 to 5; and
x and y are not simultaneously equal to 0.

In an embodiment, the compounds absorbing UV-light comprise semi-conductive nanoparticles having a local maximum absorbance of highest wavelength in the range from 320 nm to 360 nm, preferably from 320 nm to 350 nm, more preferably from 320 nm to 340 nm.

In an embodiment, the compounds absorbing UV-light comprise semi-conductive nanoparticles having a local maximum absorbance of highest wavelength in the range from 350 nm to 400 nm, preferably from 350 nm to 380 nm.

In an embodiment, the semi-conductive nanoparticles are nanospheres, nanoplates or nanorods.

In an embodiment, the semi-conductive nanoparticles are homostructures.

In an embodiment, the semi-conductive nanoparticles are heterostructures, preferably core/shell semi-conductive nanoparticles, the core being a different material from the shell.

In an embodiment, the semi-conductive nanoparticles are capped with an organic layer, an inorganic layer or a mixture thereof, and/or encapsulated in an encapsulating material.

In an embodiment, the amount of semi-conductive nanoparticles in the filtering film is in a range from 0.5 wt% to 15 wt%, based on the weight of the filtering film, for a 10 $\mu$m-thick film.

In an embodiment, the compounds absorbing UV-light comprise organic anti-UV compounds, preferably selected in the group consisting of benzotriazoles, triazines, piperidines, benzophenones, catechol, their derivatives, and mixtures thereof.

In an embodiment, the amount of organic anti-UV compounds in the filtering film is in a range from 2 wt% to 15 wt %, based on the weight of the filtering film, for a 10 $\mu$m-thick film.

In an embodiment, the amount of compounds absorbing UV-light in the filtering film is in a range from 3 wt% to 15 wt%, based on the weight of the filtering film, for a 10 $\mu$m-thick film.

In an embodiment, the compounds absorbing UV-light do not comprise more than 2.5 wt%, based on the weight of the filtering film, for a 10 $\mu$m-thick film, of core-shell semi-conductive nanoparticles comprising:

- a core of $ZnSe_xS_{(1-x)}$ material where x is in a range from 0.60 to 0.98, and
- a shell of ZnS material,

and having a local maximum absorbance of highest wavelength in the range from 350 to 500 nm.

More preferably, the compounds absorbing UV-light do not comprise core-shell semi-conductive nanoparticles comprising:

- a core of $ZnSe_xS_{(1-x)}$ material where x is in a range from 0.60 to 0.98, and
- a shell of ZnS material,

and having a local maximum absorbance of highest wavelength in the range from 350 to 500 nm.

In an embodiment, the thickness of the filtering film is in a range from 2 $\mu$m to 100 $\mu$m, preferably from 5 $\mu$m to 25 $\mu$m.

This disclosure also relates to a packaging comprising a substrate partially or totally covered with a filtering film as disclosed hereabove; or a packaging formed from a filtering film as disclosed hereabove.

This disclosure also relates to the use of a filtering film as disclosed hereabove as a protection against UV-light in a range from 300 nm to 340 nm, in particular for a glass container filled with food, cosmetic formulations or fragrance.

## DEFINITIONS

In the present invention, the following terms have the following meanings:

"**Absorbance**" is the decimal logarithm of ratio $I_0/I$, where $I_0$ is the intensity of light incident on a sample and $I$ is the intensity of light transmitted through said sample. Absorbance is measured for wavelengths in UV and visible range from 300 nm to 780 nm.

"**Encapsulated**" refers to a state in which a material - an encapsulating material - coats, surrounds, embeds, contains, comprises, wraps, packs, or encloses a plurality of particles, which may be nanoparticles or composite particles.

"**Loading charge**" refers to the mass ratio between the mass of particles comprised in a formulation and the mass of said formulation. For the sake of clarity, 10g of particles mixed with 90g of a matrix defines a loading charge of 10%.

"**Nanometric size**" refers to a size of matter in which quantum effects appear due to confinement. For semi-conductive nanoparticles, nanometric size has to be defined with the average Bohr radius of an electron/hole pair. Confinement is effective for size in at least one dimension of nanoplates below 10 nm, preferably below 5 nm. Confinement is effective for section of nanorods below 100 nm$^2$, preferably below 50 nm$^2$. Confinement is effective for diameter of nanospheres below 20 nm, preferably below 15 nm, more preferably below 10 nm.

"**Nanoparticle**" refers to a particle having a size in at least one of its dimensions below 100 nm. For a nanosphere, diameter should be below 100 nm. For a nanoplate, thickness should be below 100 nm. For a nanorod, diameter should be below 100 nm.

"**Semi-conductive nanoparticles**" refers to particles made of a material having an electronic structure corresponding to semi-conductive materials known in electronic industry but having a **nanometric size**. Due to their specific electronic structure, semi-conductive materials behave as high-pass absorbing materials. Indeed, light having a wavelength more energetic than band gap may be absorbed by the semi-conductive material, yielding an electron/hole pair, an exciton, which later recombine in the material and dissipate heat, or emit light, or both. On the contrary, light having a wavelength less energetic than band gap cannot be absorbed: semi-conductive material is transparent for these wavelengths. In macroscopic semi-conductive materials, visible light is generally absorbed while near/mid infra-red light is not absorbed. When semi-conductive particles have a **nanometric size**, confinement - *i.e.*, shape and nanometric size - governs electronic structure following the rules of quantum mechanics and light absorption may be limited to UV range or UV and high energy visible light.

"**UV-Light**": refers to electromagnetic radiations having a wavelength comprised between 280 nm and 380 nm. In this disclosure UV-C light having wavelength below 280 nm is not considered.

"**Visible light**" refers to electromagnetic radiations having a wavelength comprised between 380 nm and 780 nm.

"**wt%**" refers to the weight percentage of a component in a blend or a formulation, based on the weight of the solid blend - after drying or cure, as the case may be.

## DETAILED DESCRIPTION

Weighted mean absorbance:

This disclosure relates to a filtering film comprising compounds absorbing UV-light in a range from 300 nm to 380 nm and a binder. This filtering film presents a weighted mean absorbance $A_{380}$ greater than 2, with $A_{380}$ defined by the following relation:

$$A_{380} = \frac{\int_{300}^{380} W(\lambda) A(\lambda) d\lambda}{\int_{300}^{380} W(\lambda) d\lambda}$$

where $A(\lambda)$ represents the absorbance of the filtering film at a given wavelength $\lambda$, and $W(\lambda)$ represents a weighting function equal to the product of the solar spectrum irradiance $E_S(\lambda)$ - which can be found in ASTM G177-03(2012) standard - and a sensitivity function $S(\lambda)$.

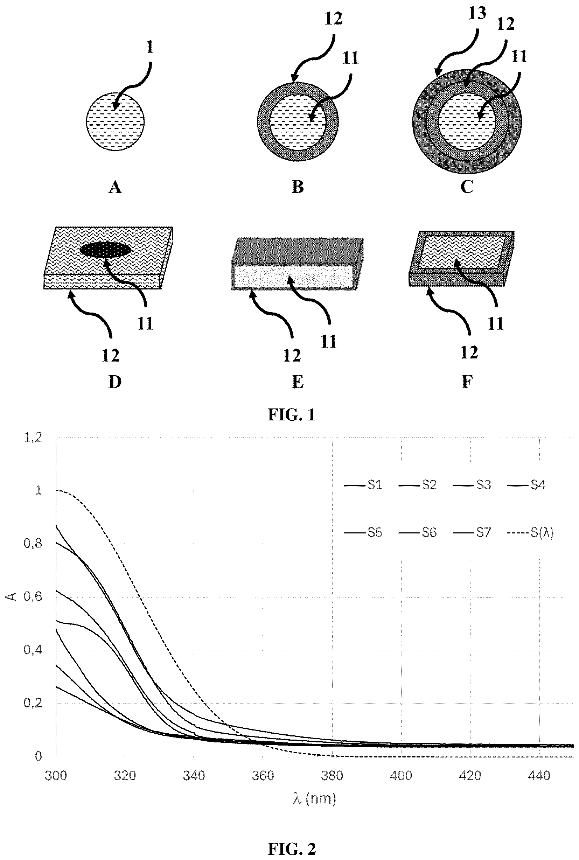

Various analysis run by the applicant have shown that odorant molecules often used in fragrances - devoid of UV stabilizers - present similar absorption spectra in UV-light, as shown in Figure 2 - for diluted fragrances. Indeed, notwithstanding some variations in amplitude, absorbance may be fitted with a gaussian function having its peak centered at 300 nm and a standard deviation of 24 nm - the right side of a gaussian function actually. Therefore, throughout the following disclosure, the sensitivity function $S(\lambda)$ is defined as a gaussian function with the peak centered at 300 nm and a standard deviation of 24 nm. The values considered in the present disclosure are presented in the following table:

Table I

| Wavelength (nm) | solar spectrum irradiance $E_S(\lambda)$ (mW/m$^2$.nm) | Sensibility $S(\lambda)$ | Weighting fonction $W(\lambda)$ |
|---|---|---|---|
| 300 | 0,081 | 1,000 | 0,081 |
| 305 | 1,91 | 0,979 | 1,869 |
| 310 | 11 | 0,917 | 10,088 |
| 315 | 30 | 0,823 | 24,694 |
| 320 | 54 | 0,707 | 38,205 |
| 325 | 79,2 | 0,582 | 46,123 |
| 330 | 101 | 0,459 | 46,366 |
| 335 | 128 | 0,347 | 44,360 |
| 340 | 151 | 0,251 | 37,834 |
| 345 | 170 | 0,173 | 29,491 |
| 350 | 188 | 0,115 | 21,624 |
| 355 | 210 | 0,073 | 15,338 |
| 360 | 233 | 0,044 | 10,349 |
| 365 | 253 | 0,026 | 6,544 |
| 370 | 279 | 0,014 | 4,025 |
| 375 | 306 | 0,008 | 2,358 |
| 380 | 336 | 0,004 | 1,324 |

The value of weighted mean absorbance $A_{380}$ greater than 2 - which means that 99% of photons in the range of 300 nm to 380 nm are absorbed by the film - has proven beneficial in ageing test presented below in examples. Indeed, a commercial filtering solution with $A_{380}$ equal to 1.8 was not satisfactory, whereas filtering film disclosed in example 4 with $A_{380}$ equal to 2.4 was satisfactory.

In an embodiment, the thickness of the filtering film is in a range from 2 $\mu$m to 100 $\mu$m, preferably from 3 $\mu$m to 50 $\mu$m, more preferably from 5 $\mu$m to 25 $\mu$m. Throughout the disclosure, filtering films have a preferred thickness of 10 $\mu$m. It is however clear that the thickness of the filtering film is not critical for absorption performance. Indeed, a low concentration of compounds absorbing UV-light in a filtering film may be compensated by a greater thickness of the film, as taught basically by Beer-Lambert law - notwithstanding nonlinear effects encountered with highly concentration of compounds absorbing UV-light. Therefore, the concentration of compounds absorbing UV-light is defined in association with a 10 $\mu$m thick film; in order to define the absolute amount of compounds absorbing UV-light in the filtering film. Another film thickness - either thicker but more diluted; or thinner but more concentrated - may be equivalent.

In an embodiment, the weighted mean absorbance $A_{380}$ is greater than 2.5, preferably greater than 3. Greater values for $A_{380}$ are possible, for instance greater than 4, or 5.

Even if the weighting function $W(\lambda)$ gives a more important role to the absorption in the range of wavelength from 300 nm to 340 nm, the contribution in higher wavelength is not negligible. In an embodiment, the filtering film presents a weighted mean absorbance $A_{340}$ greater than 2, with $A_{340}$ defined by the following relation:

$$A_{340} = \frac{\int_{300}^{340} W(\lambda)A(\lambda)d\lambda}{\int_{300}^{340} W(\lambda)d\lambda}$$

where the functions have the same definitions as hereabove for $A_{380}$. Indeed, $A_{340}$ is more focused on the range of wavelength associated with aldhehyde functions of odorous compounds and provides a better characterization of filtering effect. A weighted mean absorbance $A_{340}$ greater than 2 means that 99% of photons in the range of 300 nm to 340 nm are absorbed by the film. In an embodiment, the weighted mean absorbance $A_{340}$ is greater than 2.5, preferably greater than 3. Greater values for $A_{340}$ are possible, for instance greater than 4 or 5.

Compounds absorbing UV-light:

In the disclosure, the filtering film comprises compounds absorbing UV-light, which may be of various types.

*Semi-conductive nanoparticles*

In an embodiment, compounds absorbing UV-light are semi-conductive nanoparticles. Semi-conductive nanoparticles bring especially interesting light absorbing properties to filtering films comprising them. In particular, with proper selection of composition and structure of semi-conductive nanoparticles, filtering films having a sharp transition between range of absorbed light (of high energy) and range of transmitted light (low energy) may be designed.

Due to their electronic structure, semi-conductive nanoparticles behave as high pass filters: absorbance is high for wavelength of high energy, *i.e.*, short wavelengths. On the contrary, absorbance for wavelength of low energy, *i.e.*, long wavelengths, is low. The transition between both domains of high and low absorbance may be defined by the wavelength $\lambda_{max}$ defined as follow: $\lambda_{max}$ corresponds to the local maximum absorbance of highest wavelength in the range from 300 to 500 nm.

In other words, light of wavelength less than the wavelength $\lambda_{max}$ will not be transmitted whereas light of wavelength greater than the wavelength $\lambda_{max}$ will be transmitted. Advantageously, in the present disclosure, $\lambda_{max}$ is in the range from 320 nm to 360 nm: absorption in the range from 300 nm to 340 nm is thus very efficient to avoid aldehyde degradation, while absorption in visible light is negligible in order to avoid any undesired coloration of the filtering film. Preferably, $\lambda_{max}$ is in the range from 320 nm to 350 nm, more preferably in the range from 320 nm to 340 nm. The wavelength $\lambda_{max}$ of the semi-conductive nanoparticles can be adjusted depending on the composition, shape, dimensions and direct environment of the semi-conductive nanoparticles.

Semi-conductive nanoparticles with higher $\lambda_{max}$ may be desirable to impart some filtering properties to the filtering film in UV-light, or even visible light. For instance, the semi-conductive nanoparticles may have a $\lambda_{max}$ in the range from 350 nm to 400 nm, preferably from 350 nm to 380 nm. The property of semi-conductive nanoparticles to behaves as high pass filters is especially interesting, as all light of wavelength inferior to the wavelength $\lambda_{max}$ is "blocked".

Especially suitable semi-conductive nanoparticles have a formula

$$M_xE_y \qquad (I),$$

wherein:

M is selected from the group consisting of Zn, Cd, Hg, Cu, Ag, Al, Ga, In, Si, Ge, Sn, Pb or a mixture thereof;
E is selected from the group consisting of O, S, Se, Te, N, P, As, Sb, or a mixture thereof;
x and y are independently a decimal number from 0 to 5; and
x and y are not simultaneously equal to 0.

In a specific embodiment, semi-conductive nanoparticles comprise a material selected from the group consisting of CdS, CdSe, CdTe, ZnS, ZnSe, ZnTe, HgS, HgSe, HgTe, HgO, GeS, GeSe, GeTe, SnS, SnSe, SnTe, PbS, PbSe, PbTe, $GeS_2$, $GeSe_2$, $SnS_2$, $SnSe_2$, $CuInS_2$, $CuInSe_2$, $CuInZnS$, $CuInZnSe$, $AgInS_2$, $AgInSe_2$, $CuS$, $Cu_2S$, $Ag_2S$, $Ag_2Se$, $Ag_2Te$, FeS, $FeS_2$, InP, $Cd_3P_2$, $Zn_3P_2$, CdO, ZnO, $Al_2O_3$, AlN, AlP, AlAs, AlSb, GaN, GaP, GaAs, GaSb, InN, InP, InAs, InSb, InAsP, or a mixture thereof

In this disclosure, semi-conductive nanoparticles may have different shapes, provided that they present a nanometric size leading to confinement of exciton created in the nanoparticle. Semi-conductive nanoparticles may be nanospheres, nanoplates or nanorods.

Semi-conductive nanoparticles may have nanometric sizes in three dimensions, allowing quantum confinement in all three spatial dimensions. Such semi-conductive nanoparticles are for instance nanocubes or nanospheres.

Semi-conductive nanoparticles may have a nanometric sizes in two dimensions, the third dimension being larger: quantum confinement is in two spatial dimensions. Such semi-conductive nanoparticles are for instance nanorods, nanowires or nanorings.

Semi-conductive nanoparticles may have a nanometric size in one dimension, the other dimensions being larger: quantum confinement is in one spatial dimension only. Such semi-conductive nanoparticles are for instance nanoplates, nanosheets, nanoribbons or nanodisks. Nanoplates are especially interesting in this disclosure because absorption cross section - *i.e.*, efficiency to capture a photon of incident light on the nanoparticle - is ten times higher than a nanosphere having the same composition and structure. This higher cross section improves significantly absorption.

The exact shape of semi-conductive nanoparticles defines confinement properties; then electronic and optical properties depending on composition of semi-conductive nanoparticle, in particular the band gap, then $\lambda_{max}$ of the final filtering film. It has been also observed that nanoparticles with a nanometric size in one dimension, especially nanoplates, present a sharper transition between both domains of high and low absorbance as compared to nanoparticles with other shapes. Indeed, width of transition zone is enlarged if nanometric size of nanoparticles fluctuates around a mean value. When nanometric size is controlled in only one dimension, *i.e.* for nanoplates, by a strict number of atomic layers, thickness fluctuations are almost null and transition between absorbing and non-absorbing state is very sharp. This leads to particularly efficient filtering films.

In an embodiment, semi-conductive nanoparticles are homostructures. By homostructure, it is meant that the semi-conductive nanoparticle is homogenous and has the same local composition in all its volume. A homogeneous spherical semi-conductive nanoparticle (1) is illustrated in figure 1A.

In an alternative embodiment, semi-conductive nanoparticles are heterostructures. By heterostructure, it is meant that the semi-conductive nanoparticles is comprised of several sub-volumes, each sub-volume having a different composition from neighbouring sub-volumes. In a particular embodiment, all sub-volumes have a composition defined by formula (I) disclosed above, with different parameters, *i.e.*, elemental composition and stoichiometry.

Examples of heterostructure are core/shell nanoparticles, the core (11) having any shape disclosed above. A shell (12) is a layer covering totally or partially the core. A particular example of core/shell heterostructure is a multi-layered structure comprising a core (11) and several successive shells (12, 13). For convenience, these multi-layered heterostructures are named core/shell hereafter. Core (11) and shell (12,13) may have the same shape - sphere in sphere for example - or not - sphere in plate for instance. A core/shell spherical nanoparticle is illustrated in figure 1B. A core/shell/-shell spherical nanoparticle is illustrated in figure 1C. A sphere in plate nanoparticle is illustrated in figure 1D - also named a dot in plate. A core/shell nanoplate is illustrated in figure 1E.

Another example of heterostructure are core/crown nanoparticles, the core having any shape disclosed above. A crown is a band of material disposed on the periphery of the core. This heterostructure is particularly useful with cores being nanoplates and crown disposed on the edges of the nanoplate. A core/crown nanoplate is illustrated in figure 1F.

These heterostructure may have a gradient of composition from the core to the outside of the shell so that there is no precise boundary between core and shell but properties in centre of the core are different from properties on the outer boundary of shell.

In a configuration, semi-conductive nanoparticles are II-VI type and comprise a core based on cadmium, sulfur and selenium and are selected from:

- $CdSe/CdS$, $CdSe/CdS/ZnS$, $CdSe/CdS/ZnSe$, $CdSe/CdS/ZnSe_yS_{(1-y)}$, $CdSe/ZnSe/ZnS$, $CdSe/ZnSe_xS_{(1-x)}/ZnS$,
- $CdSe_xS_{(1-x)}/ZnS$, $CdSe_xS_{(1-x)}/ZnSe$, $CdSe_xS_{(1-x)}/ZnSe_yS_{(1-y)}$, $CdSe_xTe_{(1-x)}/ZnS$, $CdSe_xTe_{(1-x)}/ZnSe$,
- $CdSe/Cd_yZn_{(1-y)}S$, $CdSe/Cd_yZn_{(1-y)}S/ZnS$, $CdSe/Cd_yZn_{(1-y)}S/ZnSe$, $CdSe/Cd_yZn_{(1-y)}S/ZnSe_zS_{(1-z)}$
- $CdSe/Cd_yZn_{(1-y)}Se$, $CdSe/Cd_yZn_{(1-y)}Se/ZnS$, $CdSe/Cd_yZn_{(1-y)}Se/ZnSe$, $CdSe/Cd_yZn_{(1-y)}Se/ZnSe_zS_{(1-z)}$,
- $CdSe_xS_{(1-x)}/CdS$, $CdSe_xS_{(1-x)}/CdS/ZnS$, $CdSe_xS_{(1-x)}/CdS/ZnSe$, $CdSe_xS_{(1-x)}/CdS/ZnSe_yS_{(1-y)}$,
- $CdSe_xS_{(1-x)}/Cd_yZn_{(1-y)}S$, $CdSe_xS_{(1-x)}/Cd_yZn_{(1-y)}S/ZnS$, $CdSe_xS_{(1-x)}/Cd_yZn_{(1-y)}S/ZnSe$, $CdSe_xS_{(1-x)}/Cd_yZn_{(1-y)}S/ZnSe_zS_{(1-z)}$,
- $CdSe_xS_{(1-x)}/Cd_yZn_{(1-y)}Se$, $CdSe_xS_{(1-x)}/Cd_yZn_{(1-y)}Se/ZnS$, $CdSe_xS_{(1-x)}/Cd_yZn_{(1-y)}Se/ZnSe$, $CdSe_xS_{(1-x)}/Cd_yZn_{(1-y)}Se/ZnSe_zS_{(1-z)}$,

where x, y and z are rational numbers between 0 (excluded) and 1 (excluded).

In a configuration, semi-conductive nanoparticles are II-VI type and comprise a core based on zinc, sulfur and selenium and are selected from:

- $ZnSe/ZnS$, $ZnSe/ZnSe_yS_{(1-y)}$, $ZnTe/ZnSe_yS_{(1-y)}$
- $ZnSe_xS_{(1-x)}/ZnS$, $ZnSe_xS_{(1-x)}/ZnSe$, $ZnSe_xS_{(1-x)}/ZnSe_yS_{(1-y)}$, $ZnSe_xTe_{(1-x)}/ZnS$, $ZnSe_xTe_{(1-x)}/ZnSe$, $ZnSe_xTe_{(1-x)}/ZnSe_xS_{(1-x)}$,
- $ZnSe/Cd_yZn_{(1-y)}S$, $ZnSe/Cd_yZn_{(1-y)}S/ZnS$, $ZnSe/Cd_yZn_{(1-y)}S/ZnSe$, $ZnSe/Cd_yZn_{(1-y)}S/ZnSe_zS_{(1-z)}$
- $ZnSe/Cd_yZn_{(1-y)}Se$, $ZnSe/Cd_yZn_{(1-y)}Se/ZnS$, $ZnSe/Cd_yZn_{(1-y)}Se/ZnSe$, $ZnSe/Cd_yZn_{(1-y)}Se/ZnSe_zS_{(1-z)}$,
- $ZnSe_xS_{(1-x)}/ZnS$, $ZnSe_xS_{(1-x)}/ZnS/ZnSe$, $ZnSe_xS_{(1-x)}/ZnS/ZnSe_yS_{(1-y)}$,
- $ZnSe_xS_{(1-x)}/Cd_yZn_{(1-y)}S$, $ZnSe_xS_{(1-x)}/Cd_yZn_{(1-y)}S/ZnS$, $ZnSe_xS_{(1-x)}/Cd_yZn_{(1-y)}S/ZnSe$, $ZnSe_xS_{(1-x)}/Cd_yZn_{(1-y)}S/ZnSe_zS_{(1-z)}$,
- $ZnSe_xS_{(1-x)}/Cd_yZn_{(1-y)}Se$, $ZnSe_xS_{(1-x)}/Cd_yZn_{(1-y)}Se/ZnS$, $ZnSe_xS_{(1-x)}/Cd_yZn_{(1-y)}Se/ZnSe$, $ZnSe_xS_{(1-x)}/Cd_yZn_{(1-y)}Se/ZnSe_zS_{(1-z)}$,

where x, y and z are rational numbers between 0 (excluded) and 1 (excluded). In this configuration, x is preferably a rational number between 0 (excluded) and 0.6.

In a configuration, semi-conductive nanoparticles are II-VI type and comprise a core based on zinc, cadmium, sulfur and selenium and are selected from:

- $Cd_wZn_{(1-w)}Se/CdS$, $Cd_wZn_{(1-w)}Se/CdS/ZnS$, $Cd_wZn_{(1-w)}Se/ZnSe/ZnS$, $Cd_wZn_{(1-w)}Se/CdS/ZnSe$, $Cd_wZn_{(1-w)}Se/CdS/ZnSe_yS_{(1-y)}$,
- $Cd_wZn_{(1-w)}Se_xS_{(1-x)}/ZnS$, $Cd_wZn_{(1-w)}Se_xS_{(1-x)}/ZnSe$, $Cd_wZn_{(1-w)}Se_xS_{(1-x)}/ZnSe_yS_{(1-y)}$, $Cd_wZn_{(1-w)}Se_xTe_{(1-x)}/ZnS$, $Cd_wZn_{(1-w)}Se_xTe_{(1-x)}/ZnSe$,
- $Cd_wZn_{(1-w)}Se/Cd_yZn_{(1-y)}S$, $Cd_wZn_{(1-w)}Se/Cd_yZn_{(1-y)}S/ZnS$, $Cd_wZn_{(1-w)}Se/Cd_yZn_{(1-y)}S/ZnSe$, $Cd_wZn_{(1-w)}Se/Cd_yZn_{(1-y)}S/ZnSe_zS_{(1-z)}$,
- $Cd_wZn_{(1-w)}Se/Cd_yZn_{(1-y)}Se$, $Cd_wZn_{(1-w)}Se/Cd_yZn_{(1-y)}Se/ZnS$, $Cd_wZn_{(1-w)}Se/Cd_yZn_{(1-y)}Se/ZnSe$, $Cd_wZn_{(1-w)}Se/Cd_yZn_{(1-y)}Se/ZnSe_zS_{(1-z)}$,
- $Cd_wZn_{(1-w)}Se_xS_{(1-x)}/CdS$, $Cd_wZn_{(1-w)}Se_xS_{(1-x)}/CdS/ZnS$, $Cd_wZn_{(1-w)}Se_xS_{(1-x)}/CdS/ZnSe$, $Cd_wZn_{(1-w)}Se_xS_{(1-x)}/CdS/ZnSe_yS_{(1-y)}$,
- $Cd_wZn_{(1-w)}Se_xS_{(1-x)}/Cd_yZn_{(1-y)}S$, $Cd_wZn_{(1-w)}Se_xS_{(1-x)}/Cd_yZn_{(1-y)}S/ZnS$, $Cd_wZn_{(1-w)}Se_xS_{(1-x)}/Cd_yZn_{(1-y)}S/ZnSe$, $Cd_wZn_{(1-w)}Se_xS_{(1-x)}/Cd_yZn_{(1-y)}S/ZnSe_zS_{(1-z)}$,
- $Cd_wZn_{(1-w)}Se_xS_{(1-x)}/Cd_yZn_{(1-y)}Se$, $Cd_wZn_{(1-w)}Se_xS_{(1-x)}/Cd_yZn_{(1-y)}Se/ZnS$, $Cd_wZn_{(1-w)}Se_xS_{(1-x)}/Cd_yZn_{(1-y)}Se/ZnSe$, $Cd_wZn_{(1-w)}Se_xS_{(1-x)}/Cd_yZn_{(1-y)}Se/ZnSe_zS_{(1-z)}$,

where w, x, y and z are rational numbers between 0 (excluded) and 1 (excluded).

Most preferred II-VI nanoparticles are $CdSe/CdS/ZnS$, $CdSe_xS_{(1-x)}/CdS/ZnS$, $CdSe/ZnSe/ZnS$, $CdSe/ZnSe_xS_{(1-x)}/ZnS$, $CdSe_xS_{(1-x)}/ZnSe/ZnS$, $Cd_xZn_{(1-x)}Se/ZnSe/ZnS$, $ZnSe_xS_{(1-x)}/ZnS$, $ZnSe_xS_{(1-x)}/ZnSe$, $ZnSe_xS_{(1-x)}/ZnSe_yS_{(1-y)}$.

Other particularly suitable nanoparticles are III-V type semi-conductive nanoparticles and are selected from InP/ZnS, InP/ZnSe, $InP/ZnSe_xS_{(1-x)}$, InP/CdS/ZnS, InP/ZnSe/ZnS, $InP/ZnSe_xS_{(1-x)}/ZnS$, InP/GaP, $Cu_xIn_yZn_{(1-x-y)}S/ZnS$, $In_xAs_{(1-x)}P/ZnSe_xS_{(1-x)}$, where x and y are rational numbers between 0 (excluded) and 1 (excluded).

Other particularly suitable nanoparticles are I-III-VI$_2$ type semi-conductive nanoparticles and are selected from $AgInS_2$, $AgInSe_2$, $Cu_xIn_{(1-x)}S_2$, $Cu_xIn_{(1-x)}Se_2$, especially $CuInS_2$ and $CuInSe_2$, where x is a rational numbers between 0 (excluded) and 1 (excluded).

Other particularly suitable nanoparticles are selected from doped quantum dots as core, such as ZnSe:Mn/ZnS, or ZnSe:Cu/ZnS.

Other particularly suitable nanoplates are selected from $ZnTe/ZnSe_yS_{(1-y)}$, $ZnSe_xTe_{(1-x)}/ZnS$, $ZnSe_xTe_{(1-x)}/ZnSe$, $ZnSe_xTe_{(1-x)}/ZnSe_yS_{(1-y)}$, where x and y are rational numbers between 0 (excluded) and 1 (excluded).

In an advantageous embodiment, semi-conductive nanoparticles have a largest dimension below 100 nm, in particular below 50 nm, ideally below 20 nm. Semi-conductive nanoparticles of small size do not induce light scattering when dispersed in a material having a different refractive index.

In an embodiment, the amount of semi-conductive nanoparticles in the filtering film is in a range from 0.5 wt% to 15 wt%, based on the weight of the filtering film, for a 10 $\mu$m-thick film, preferably from 1 wt% to 12 wt%, more preferably from 1.5 wt% to 10 wt%.

Semi-conductive nanoparticles of II-VI type and comprising a core based on zinc, sulfur and selenium are especially suitable as compounds absorbing UV-light when used with a concentration from 0.5 wt% to 8 wt%.

In an embodiment, the semi-conductive nanoparticles are capped with an organic layer, an inorganic layer or a mixture thereof.

*Composite particles*

In an embodiment, the semi-conductive nanoparticles are encapsulated in an encapsulating material, leading to composite particles. By encapsulating material, it is meant a material that covers all surface of semi-conductive nanoparticles. In other words, encapsulating material forms a barrier around the semi-conductive nanoparticles. Such a barrier as several advantages. In particular, said semi-conductive nanoparticles may be protected against chemicals, *e.g.*, moisture, oxidants. Besides, semi-conductive nanoparticles that are not dispersible in a medium may be encapsulated in a material whose compatibility with said medium is good: the barrier behaves as a compatibilization agent. In addition, encapsulated semi-conductive nanoparticles may be under the form of a powder dispersible in a medium instead of a dispersion in a solvent, thereby providing with easier handling. Last, the encapsulating material may have a role of refractive index matching, in order to lower diffusion or haze: indeed, when semi-conductive nanoparticles are dispersed in a matrix, haze is proportional to the difference of refractive index between the matrix and the dispersed nanoparticles. Adding an encapsulating material with an intermediate refractive index mitigates this effect and lowers haze.

The encapsulating material may be an organic material or an inorganic material. For instance, the organic material may be selected from allyl polymers, (meth)acrylic polymers; epoxy compounds; polyurethane, polyester, polythiourethane materials, or mixture thereof. For instance, the inorganic material may be selected from sol gel materials, metal oxide materials, mineral oxides, or mixture thereof.

Suitable inorganic material may be selected from the group consisting of $SiO_2$, $Al_2O_3$, $TiO_2$, $ZrO_2$, $HfO_2$, $GeO_2$, $SnO_2$, or a mixture thereof, including for instance $Al_yZr_zO$ with $\frac{3}{2}y + 2z = 1$. In an embodiment, the encapsulating material does not consist of pure $SiO_2$.

In an embodiment, the encapsulating material does not absorb UV-light, and absorbance of the filtering film is only defined by semi-conductive nanoparticles. Alternatively, the encapsulating material does absorb UV-light, and absorbance of the filtering film is defined by the sum of absorbance of semi-conductive nanoparticles and absorbance of encapsulating material.

In an embodiment, the loading charge of the semi-conductive nanoparticles in the composite particle is at least 1%, preferably at least 2.5%, more preferably at least 5%, said loading charge being the mass ratio between the mass of semi-conductive nanoparticles comprised in a composite particle and the mass of said composite particle. Indeed, the performance of composite particles is proportional to the concentration of semi-conductive nanoparticles they contain. Therefore, a high concentration of semi-conductive nanoparticles is advantageous. It has to be noted however that increasing concentration of semi-conductive nanoparticles without degrading their properties - as a consequence of aggregation or manufacturing process for instance - is not easy.

The composite particles may be in the form of a monodisperse population. Monodisperse composite particles are advantageous for various reasons, depending on the domain of application. When composite particles are used in filtering films, a homogeneous size distribution avoids uncontrolled light diffusion and ensures spatial homogeneity of the filtering film.

In an embodiment, composite particles have a largest dimension below 500 nm, in particular below 300 nm, ideally below 200 nm.

The mean size of the composite particles is preferably in a range from 50 nm to 500 nm, more preferably from 50 nm to 250 nm. Composite particles having a mean size from 50 nm to 250 nm, preferably from 50 nm to 100 nm are especially suitable to obtain filtering films with high transparency and low haze.

The composite particles may be chemically modified on their surface. Chemical modification may be obtained by grafting, by adsorption of molecules or by physical processes - heat, vacuum or gaseous treatment. Chemical modification may use compatibilization agents, allowing to mix composite particles in complex formulations - such as resins, varnishes, paints, colloidal dispersion, polymerizable compositions... - without aggregation or phase separation of the composite particles.

*Organic compounds absorbing UV-light*

As an alternative to semi-conductive nanoparticles, compounds absorbing UV-light may be organic anti-UV compounds.

Especially suitable organic anti-UV compounds may be selected in the group consisting of benzotriazoles, triazines, piperidines, benzophenones, catechol, their derivatives, and mixtures thereof.

Suitable benzotriazoles are derivatives of (2H-benzotriazol-2-yl)-4-hydroxybenzene such as Sodium 3-(2H-benzotriazol-2-yl)-5-sec-butyl-4-hydroxybenzenesulfonate - CAS number 92484-48-5 - or Polyethylene glycol mono-3-(3-(2H-benzotriazol-2-yl)-5-tert-butyl-4-hydroxyphenyl)-1-oxopropyl ether - CAS number 104810-48-2 - or Polyethylene glycol di[3-[3-(2H-benzotriazol-2-yl)-5-tert-butyl-4-hydroxyphenyl]-1-oxopropyl] ether - CAS number 104810-47-1 - or Benzenepropanoic acid, 3-(2H-benzotriazol-2-yl)-5-(1,1-dimethylethyl)-4-hydroxy-, C7-9-branched and linear alkyl esters - CAS number 127519-17-9 - or 2-(2H-Benzotriazol-2-yl)-6-(1-methyl-1-phenylethyl)-4-(1,1,3,3-tetramethylbutyl)phenol - CAS number 73936-91-1.

Suitable triazines are reaction products of 1,3-Benzenediol, 4-[4,6-bis(2,4-dimethylphenyl)-1,3,5-triazin-2-yl] with [(dodecyloxy)methyl]oxirane and oxirane mono[(C10-16-alkyloxy)methyl] derivatives - CAS number 153519-44-9 - or Isooctyl 2-[4-[4,6-bis[(1,1'-biphenyl)-4-yl]-1,3,5-triazin-2-yl]-3-hydroxyphenoxy]propanoate - CAS number 204848-45-3 - or triazine know as TINUVIN®477 supplied by BASF.

A suitable piperidines is bis(1-octyloxy-2,2,6,6-tetramethyl-4-piperidyl) sebacate - CAS number 129757-67-1.

A mixture of bis(1-octyloxy-2,2,6,6-tetramethyl-4-piperidyl) sebacate - CAS number 129757-67-1 - and reaction products of 1,3-Benzenediol, 4-[4,6-bis(2,4-dimethylphenyl)-1,3,5-triazin-2-yl] with [(dodecyloxy)methyl]oxirane and oxirane mono[(C10-16-alkyloxy)methyl] derivatives - CAS number 153519-44-9 - known under tradename Eversorb AQ8 is especially suitable.

Other suitable organic anti-UV compounds are avobenzones, such as 1,3-Propanedione, 1-[4-(1,1-dimethylethyl)phenyl]-3-(4-methoxyphenyl)- - CAS number 70356-09-1 - or the compound known under tradename Parsol guard.

Among these organic anti-UV compounds, those having an absorption peak - either principal or secondary - in the range from 300 nm to 340 nm are preferred. In particular, Tinuvin 384-2, Eversorb AQ8 and Tinogard HS are suitable.

The following mixture of organic anti-UV compounds is also suitable: Tinuvin 384-2; Parsol Guard and Eversorb AQ8 in 1:1:1 proportion.

In an embodiment, the amount of organic anti-UV compounds in the filtering film is in a range from 2 wt% to 15 wt%, based on the weight of the filtering film, for a 10 $\mu$m-thick film, preferably from 2.5 wt% to 12 wt%, more preferably from 3 wt% to 10 wt%.

In an embodiment, compounds absorbing UV-light comprise a mixture of one or more semi-conductive nanoparticles and/or one or more organic anti-UV compounds. In this embodiment, the amount of compounds absorbing UV-light in the filtering film is in a range from 3 wt% to 15 wt%, based on the weight of the filtering film, for a 10 $\mu$m-thick film.

In an embodiment, the compounds absorbing UV-light do not comprise more than 2.5 wt%, based on the weight of the filtering film, for a 10 $\mu$m-thick film, of core-shell semi-conductive nanoparticles comprising:

- a core of $ZnSe_xS_{(1-x)}$ material where x is in a range from 0.60 to 0.98, and
- a shell of ZnS material,

and having a local maximum absorbance of highest wavelength in the range from 350 to 500 nm.

More preferably, the compounds absorbing UV-light do not comprise core-shell semi-conductive nanoparticles comprising:

- a core of $ZnSe_xS_{(1-x)}$ material where x is in a range from 0.60 to 0.98, and
- a shell of ZnS material,

and having a local maximum absorbance of highest wavelength in the range from 350 to 500 nm.

Binder:

In the disclosure, the filtering film comprises a binder. This binder may be of various polymer types, for instance selected among poly(methyl methacrylate) (PMMA), poly(butyl methacrylate), poly(lauryl methacrylate), poly(vinyl butyral), poly(vinyl acetate), poly(ethylene vinyl acetate), thermoplastic polyurethane, cellulose, ionoplast, polycarbonate, poly(ethylene vinyl alcool), polyester/melamine adducts, silicone, polyphenylmethylsiloxane, polyphenylalkylsiloxane, polydiphenylsiloxane, polydialkylsiloxane, fluorinated silicone, vinyl and hydride substituted silicone, divinylbenzene, or a mixture thereof

The filtering film may be obtained from a thermoplastic polymer, in which compounds absorbing UV-light are dispersed, typically during melting/extrusion/stretching process. The thickness of the filtering film is here controlled by the fabrication process.

Alternatively, the filtering film may be obtained from a polymerizable composition, in which compounds absorbing UV-light are dispersed. Then, the polymerizable composition is cured - thermally, actinically or by any other curing mean - or dried to yield a film. In this case, the polymerizable composition may comprise a solvent.

In an embodiment, the film is obtained by curing a Sol-Gel polymerizable composition and has a thickness in a range from 1 $\mu$m to 15 $\mu$m, preferably from 1 $\mu$m to 10 $\mu$m, more preferably from 2 $\mu$m to 6 $\mu$m.

In one embodiment, the film is obtained by curing a composition comprising (meth)acrylics monomers or oligomers, epoxy monomers or oligomers, or mixture thereof. In particular, the thickness of coating obtained by curing said polymerizable composition is in a range from 2 $\mu$m to 100 $\mu$m, preferably from 3 $\mu$m to 50 $\mu$m, more preferably from 4 $\mu$m to 30 $\mu$m.

Packaging:

This disclosure also relates to a packaging, especially a light filtering glass container.

In the disclosure, the filtering film may be a self-standing material or may be laid on a substrate to form a packaging. Especially interesting substrates are glass containers, in order to form light filtering glass containers.

To this end, a filtering film may be deposited on the surface of the substrate. Adhesion between substrate and filtering film may be provided by an adhesive, or by the tacky properties of the filtering film itself.

Alternatively, a polymerizable composition may be coated on the surface of the substrate - by any method such as spray coating or dip coating for instance - and cured or dried to obtain the filtering film.

Last, the filtering film may be used directly to form a packaging. In this case, the thickness for the filtering film may be in a range from 50 $\mu$m to 3 mm.

Use:

This disclosure also relates to the use of a filtering film as disclosed hereabove as a protection against UV-light in a range from 300 nm to 340 nm.

For instance, a substrate may be covered with a filtering film as disclosed hereabove. Then, the substrate may be disposed around the product to be protected. In particular, the substrate may be a glass container, and the product - food, cosmetic or fragrance for instance - may be filled inside the glass container to be protected against UV-light.

Alternatively, the filtering film may be formed into a packaging, in which the product is filled, wrapped or otherwise contained.

## BRIEF DESCRIPTION OF THE DRAWINGS

**Figure 1A-1F** illustrates various nanoparticles with homostructure (A) or heterostructures: spherical core/shell (B), spherical core/shell/shell (C), dot in plate (D), nanoplate core/shell (E) and nanoplate core/crown (F).

**Figure 2** shows absorbance curves as a function of wavelength of 7 different odorant molecules often used in fragrances (noted S1 to S7) devoid of UV-stabilizers. The curve of the sensitivity function $S(\lambda)$ is shown in dotted line.

**Figure 3** shows absorbance curves as a function of wavelength $A(\lambda)$ for a commercial coating (Comparative example in dotted line) and Ex.1 (in double line).

**Figure 4** shows absorption curves as a function of wavelength $A(\lambda)$ for a commercial coating (Comparative example in dotted line) and Ex.4 (in continuous line).

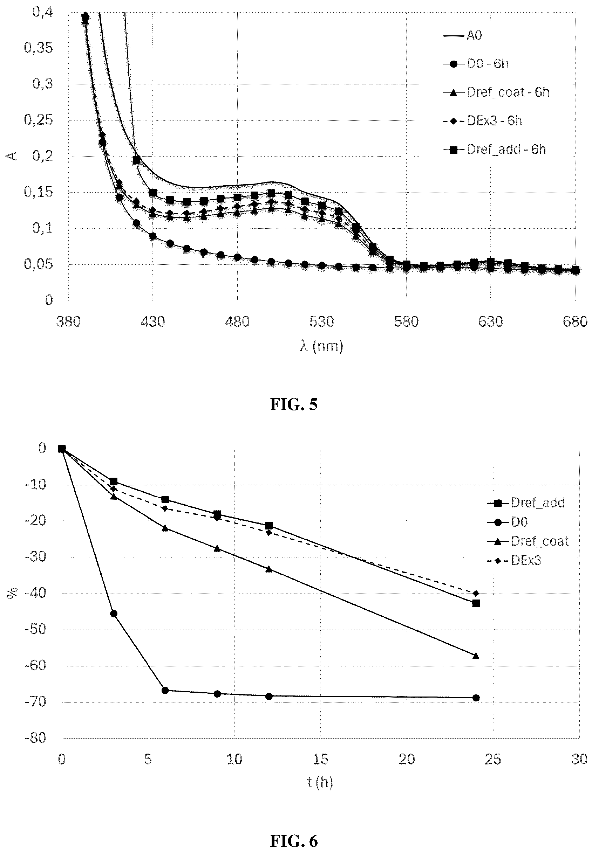

**Figure 5** shows the UV-visible spectrum of a fragrance (absorbance A) as a function of wavelength ($\lambda$ in nm) in different conditions. A0 represent a fragrance before SUNTEST. D0-6h represents the spectrum of the fragrance devoid of any UV protection after 6 hours of SUNTEST. Dref_add-6h represents a fragrance comprising an additive - mainly avobenzone - after 6 hours of SUNTEST. Dref_coat-6h represents a fragrance protected by the reference coating of comparative example after 6 hours of SUNTEST. DEx3-6h represents a fragrance protected by the filtering film of example 3 after 6 hours of SUNTEST.

**Figure 6** shows the relative decrease (%) of absorbance at 500 nm of a reference fragrance during time (t in hours) under SUNTEST conditions. D0 represents a fragrance devoid of UV protection: a strong and quick degradation is observed. Dref_add represents a fragrance comprising an additive - mainly avobenzone - setting the standard protection of the industry. Dref_coat represents a fragrance protected by the reference coating of comparative example. DEx3 represents a fragrance protected by the filtering film of example 3.

## EXAMPLES

The present invention is further illustrated by the following examples.

Absorption curve of filtering films:

A filtering film is prepared by application on a glass plate of 250 $\mu$L of a liquid composition with a cube coater, to obtain a 100 $\mu$m thick coating, then cured 12 minutes in an oven at 180°C, yielding a 10 $\mu$m thick dry film.

The thickness of the film is controlled by a profilometer then absorbance of the film is measured. The absorbance of the glass plate is subtracted to obtain the absorbance of the sole filtering film.

Ageing test:

In order to assess the protection of the filtering films, the following protocol is used.

A bottle is coated with a polymerizable composition then cured. After cure, the filtering film is 10 $\mu$m thick.

The UV-visible absorbance spectrum of a composition under study - either food, cosmetic formulation or fragrance - is measured.

Then, the bottle is filled with the composition under study and the bottle is placed under constant illumination corresponding to D65 illuminant - thus including UV light from 300 nm wavelength - with 550W/m$^2$ total power during 24 hours at 40°C temperature - referred to as SUNTEST.

During the SUNTEST, the UV-visible absorbance value at 500 nm of the aged composition is measured and compared with the spectrum before SUNTEST.

The comparison of spectra before and during SUNTEST allows to determine if the composition under study has been protected by the filtering film or not.

Figure 5 shows the UV-visible spectrum A0 of a fragrance before SUNTEST. D0-6h represents the spectrum of the fragrance devoid of any UV protection after 6 hours. Dref_add-6h represents a fragrance comprising an additive - mainly avobenzone - after 6 hours setting the standard protection of the industry. Note that the spectrum below 430 nm is slightly different due to the presence of the additive. Dref_coat-6h represents a fragrance protected by the reference coating of comparative example: the protection is not appropriate. Finally, DEx3-6h represents a fragrance protected by the filtering film of example 3: protection is better than the reference coating and approaches the standard of industry.

Figure 6 presents the relative decrease of absorbance at 500 nm for a fragrance during a SUNTEST. D0 represents a fragrance devoid of UV protection: a strong and quick degradation is observed. Dref_add represents a fragrance comprising an additive - mainly avobenzone - setting the standard protection of the industry. Dref_coat represents a fragrance protected by the reference coating of comparative example: the protection is not appropriate. DEx3 represents a fragrance protected by the filtering film of example 3: protection is similar to the standard of industry.

In addition, a visual comparison of the colour of the composition before and after SUNTEST is used for coloured samples. A visually detectable change in colour lead to a "FAIL" classification of the filtering film.

Comparative example:

Two commercial bottles used for fragrance and comprising a filtering film are used. The first bottle is cleaned in order to remove the filtering film. The second bottle is used without intervention.

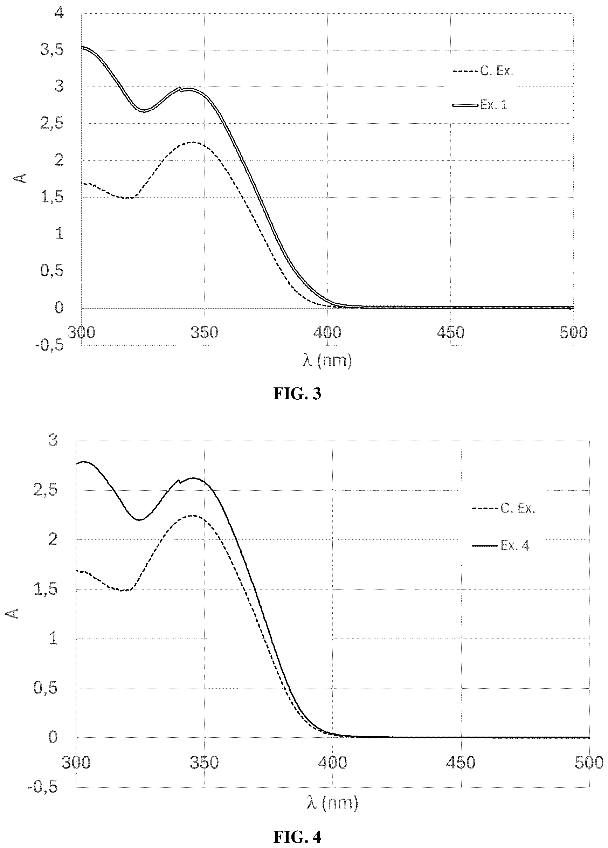

The absorption of the filtering film is measured by difference of absorption between second bottle and first bottle. The absorption curve is shown in figures 3 and 4

- dotted line. The corresponding values for $A_{380}$ and $A_{340}$ are 1.8 and 1.8 respectively.

In SUNTEST, the commercial bottle is not satisfactory: changes in UV-visible absorption spectrum - see figure 5 - and colour of the fragrance are observed.

Example 1:

5 wt% of organic absorber Tinuvin 384-2 and 5 wt% of core shell semi-conductive nanoparticles SC#1 are added in a waterborne polyester resin (75 parts) - hexamethoxymethyl melamine (25 parts) polymerizable composition - hereafter Ref binder - then cured. After cure, the filtering film is 10 μm thick.. The core of the semi-conductive nanoparticles has a diameter of 3.0 nm and formula $ZnSe_xS_{(1-x)}$ with x about 0.94 and a shell of ZnS of mean thickness 1.3 nm. $\lambda_{max}$ for SC#1 is about 400 nm.

The absorption curve is shown in figure 3. The corresponding values for $A_{380}$ and $A_{340}$ are 2.8 and 2.8 respectively.

In SUNTEST, bottle of example 1 is satisfactory: a fragrance devoid of UV-stabilizer is not degraded - see figure 5.

Examples 2-7:

Example 1 is reproduced, but composition of compounds absorbing UV-light is changed according to the following table.

Table II

| Ex | Semi-conductive nanoparticles | wt% | Organic anti-UV compounds | wt% | $A_{380}$ | $A_{340}$ | SUNTEST |
|---|---|---|---|---|---|---|---|
| 1 | SC#1 | 5 | Tinuvin 384-2 | 5 | 2.8 | 2.8 | PASS |
| 2 | SC#1 | 1.1 | Tinuvin 384-2 | 5 | | | PASS |
| 3 | SC#1 | 1.1 | Tinuvin 384-2 | 7.5 | 3.6 | 3.7 | PASS |
| 4 | - | - | Tinuvin 384-2 | 5 | 2.4 | 2.4 | PASS |
| 5 | SC#1 | 4.6 | Tinogard HS | 1.3 | 3 | 3.2 | PASS |
| 6 | SC#1 | 1.1 | Tinuvin 384-2<br>Tinuvin 249 | 5<br>1.3 | | | PASS |
| 7 | SC#1 | 1.1 | Tinuvin 384-2<br>Tinuvin 249 | 10<br>2.6 | | | PASS |

**Claims**

1. A filtering film comprising compounds absorbing UV-light in a range from 300 nm to 380 nm and a binder, wherein the weighted mean absorbance $A_{380}$ of the filtering film is greater than 2, with $A_{380}$ defined by the following relation:

$$A_{380} = \frac{\int_{300}^{380} W(\lambda)A(\lambda)d\lambda}{\int_{300}^{380} W(\lambda)d\lambda}$$

where $A(\lambda)$ represents the absorbance of the filtering film at a given wavelength, and $W(\lambda)$ represents a weighting function equal to the product of the solar spectrum irradiance $E_S(\lambda)$ and a sensitivity function $S(\lambda)$ defined as a gaussian function with the peak centered at 300 nm and a standard deviation of 24 nm.

2. The filtering film according to claim **1**, wherein the weighted mean absorbance $A_{380}$ is greater than 2.5, preferably greater than 3.

3. The filtering film according to claim **1** or **2**, wherein the weighted mean absorbance $A_{340}$ of the filtering film is greater than 2, preferably greater than 2.5, with $A_{340}$ defined by the following relation:

$$A_{340} = \frac{\int_{300}^{340} W(\lambda)A(\lambda)d\lambda}{\int_{300}^{340} W(\lambda)d\lambda}$$

4. The filtering film according to anyone of claims 1 to 3, wherein compounds absorbing UV-light comprise semi-conductive nanoparticles having a formula

$$M_xE_y \qquad (I),$$

wherein:

M is selected from the group consisting of Zn, Cd, Hg, Cu, Ag, Al, Ga, In, Si, Ge, Sn, Pb or a mixture thereof;
E is selected from the group consisting of O, S, Se, Te, N, P, As, Sb, or a mixture thereof;
x and y are independently a decimal number from 0 to 5; and
x and y are not simultaneously equal to 0.

5. The filtering film according to anyone of claims **1** to **4**, wherein compounds absorbing UV-light comprise semi-conductive nanoparticles having a local maximum absorbance of highest wavelength in the range from 320 nm to 360 nm.

6. The filtering film according to anyone of claims **4** to **5**, wherein the amount of semi-conductive nanoparticles in the filtering film is in a range from 0.5 wt% to 15 wt%, based on the weight of the filtering film, for a 10 μm-thick film.

7. The filtering film according to anyone of claims **1** to **6**, wherein compounds absorbing UV-light comprise organic anti-UV compounds, preferably selected in the group consisting of benzotriazoles, triazines, piperidines, benzophenones, catechol, their derivatives, and mixtures thereof.

8. The filtering film according to claim **7**, wherein the amount of organic anti-UV compounds in the filtering film is in a range from 2 wt% to 15 wt%, based on the weight of the filtering film, for a 10 μm-thick film.

9. The filtering film according to anyone of claims **1** to **8**, wherein the amount of compounds absorbing UV-light in the filtering film is in a range from 3 wt% to 15 wt%, based on the weight of the filtering film, for a 10 μm-thick film.

10. The filtering film according to anyone of claims **1** to **9**, wherein the compounds absorbing UV-light do not comprise more than 2.5 wt%, based on the weight of the filtering film, for a 10 μm-thick film, of core-shell semi-conductive nanoparticles comprising:

- a core of $ZnSe_xS_{(1-x)}$ material where x is in a range from 0.60 to 0.98, and
- a shell of ZnS material,

and having a local maximum absorbance of highest wavelength in the range from 350 to 500 nm.

11. The filtering film according to anyone of claims **1** to **9**, wherein the compounds absorbing UV-light do not comprise core-shell semi-conductive nanoparticles comprising:

- a core of $ZnSe_xS_{(1-x)}$ material where x is in a range from 0.60 to 0.98, and
- a shell of ZnS material,

and having a local maximum absorbance of highest wavelength in the range from 350 to 500 nm.

12. The filtering film according to anyone of claims **1** to **11**, wherein the thickness of the filtering film is in a range from 2 $\mu$m to 100 $\mu$m, preferably from 5 $\mu$m to 25 $\mu$m.

13. A packaging comprising a substrate partially or totally covered with a filtering film according to any one of claims **1** to **12**; or formed from a filtering film according to any one of claims **1** to **12**.

14. Use of a filtering film according to any one of claims **1** to **12** as a protection against UV-light in a range from 300 nm to 340 nm, in particular for a glass container filled with food, cosmetic formulations or fragrance.

**FIG. 1**

**FIG. 2**

**FIG. 3**

**FIG. 4**

**FIG. 5**

**FIG. 6**

Europäisches
Patentamt

European
Patent Office

Office européen
des brevets

## EUROPEAN SEARCH REPORT

**Application Number**

EP 24 30 6497

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/038427 A1 (3M INNOVATIVE PROPERTIES CO [US]) 4 March 2021 (2021-03-04) | 1-12 | INV. C08J5/18 |
| Y | * page 1, line 5 - line 7 * <br> * page 1, paragraph 21 - paragraph 29 * <br> * claims 1-10 * <br> * page 12, line 1 - page 15, line 4; examples 1-9; tables 1, 2 * <br> * page 7, line 21 - line 31 * <br> ----- | 13,14 | |
| Y | WO 03/018696 A1 (BOTTLE MAGIC AUSTRALIA PTY LTD [AU]; LELE IMRE [AU]) 6 March 2003 (2003-03-06) * page 1, line 1 - line 6 * * claims 1-3, 20 * ----- | 13,14 | |
| Y | WO 2021/165487 A1 (NEXDOT [FR]) 26 August 2021 (2021-08-26) * WPI abstract; claims 1-13 * ----- | 13,14 | |

**TECHNICAL FIELDS SEARCHED (IPC)**

C08J

The present search report has been drawn up for all claims

| Place of search | Date of completion of the search | Examiner |
|---|---|---|
| Munich | 13 February 2025 | Meiser, Wibke |

EPO FORM 1503 03.82 (P04C01)

## ANNEX TO THE EUROPEAN SEARCH REPORT
## ON EUROPEAN PATENT APPLICATION NO.

EP 24 30 6497

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | | | Publication date | Patent family member(s) | | Publication date |
|---|---|---|---|---|---|---|
| WO 2021038427 | A1 | | 04-03-2021 | JP | 2021030691 A | 01-03-2021 |
| | | | | WO | 2021038427 A1 | 04-03-2021 |
| WO 03018696 | A1 | | 06-03-2003 | NONE | | |
| WO 2021165487 | A1 | | 26-08-2021 | AU | 2021223716 A1 | 08-09-2022 |
| | | | | CN | 115136031 A | 30-09-2022 |
| | | | | CN | 115151840 A | 04-10-2022 |
| | | | | CN | 115398276 A | 25-11-2022 |
| | | | | EP | 4107555 A1 | 28-12-2022 |
| | | | | EP | 4107556 A1 | 28-12-2022 |
| | | | | EP | 4107557 A1 | 28-12-2022 |
| | | | | JP | 2023514376 A | 05-04-2023 |
| | | | | JP | 2023515035 A | 12-04-2023 |
| | | | | KR | 20220138055 A | 12-10-2022 |
| | | | | KR | 20220138056 A | 12-10-2022 |
| | | | | KR | 20220144386 A | 26-10-2022 |
| | | | | US | 2023082669 A1 | 16-03-2023 |
| | | | | US | 2023086353 A1 | 23-03-2023 |
| | | | | US | 2023088289 A1 | 23-03-2023 |
| | | | | WO | 2021165485 A1 | 26-08-2021 |
| | | | | WO | 2021165486 A1 | 26-08-2021 |
| | | | | WO | 2021165487 A1 | 26-08-2021 |
| | | | | WO | 2021165496 A1 | 26-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 92484-48-5
- *CHEMICAL ABSTRACTS*, 104810-48-2
- *CHEMICAL ABSTRACTS*, 104810-47-1
- *CHEMICAL ABSTRACTS*, 127519-17-9
- *CHEMICAL ABSTRACTS*, 73936-91-1
- *CHEMICAL ABSTRACTS*, 153519-44-9
- *CHEMICAL ABSTRACTS*, 204848-45-3
- *CHEMICAL ABSTRACTS*, 129757-67-1
- *CHEMICAL ABSTRACTS*, r 153519-44-9
- *CHEMICAL ABSTRACTS*, 70356-09-1